# EUROPEAN PATENT SPECIFICATION

(11) **EP 3 439 336 B1**
(45) Date of publication and mention of the grant of the patent: **13.11.2019**
(21) Application number: 16896919.4
(22) Date of filing: 31.03.2016
(51) Int. Cl.: H04W 4/70, H04W 16/26, H04W 24/10, H04W 28/18, H04W 72/04, H04W 88/04

(54) **WIRELESS COMMUNICATION SYSTEM, WIRELESS DEVICE, RELAY NODE, AND BASE STATION**
DRAHTLOSKOMMUNIKATIONSSYSTEM, DRAHTLOSE VORRICHTUNG, RELAISKNOTEN UND BASISSTATION
SYSTÈME DE COMMUNICATION SANS FIL, DISPOSITIF SANS FIL, NOEUD DE RELAIS ET STATION DE BASE

(43) Date of publication of application: 06.02.2019
(73) Proprietor: Fujitsu Limited, Kawasaki-shi, Kanagawa 211-8588 (JP)
(72) Inventor: CHEN, Hongyang, Kawasaki-shi Kanagawa 211-8588 (JP)
(74) Representative: Haseltine Lake Kempner LLP
(86) International application number: PCT/JP2016/060751
(87) International publication number: WO 2017/168702

(56) References cited:
- EP-A1- 2 903 392
- WO-A1-2014/051126
- WO-A1-2014/183474
- JP-A- 2014 527 763
- US-A1- 2014 098 761
- US-A1- 2014 204 835
- ERICSSON: "Remaining issues on random access for Rel-13 low complexity and enhanced coverage Ues", 3GPP TSG-RAN WG2 #92 R2-156774, 16 November 2015 (2015-11-16), XP051040424,

## Description

### FIELD

A technology that is described in the present specification relates to a wireless communication system, a wireless equipment, a relay node, and a base station.

### BACKGROUND

With the Internet of Things (IoT), various "things" each can be equipped with a communication function. The various "things", each of which is equipped with the communication function, make a connection to the Internet, a wireless access network, or the like, and thus can perform communication or can perform communication with each other.

In some cases, the communication by the "things" is referred to as "device to device (D2D) communication", machine type communications (MTC), or the like.

For this reason, in some cases, the "thing" that is equipped with the communication function is referred to as a D2D device, an MTC device, or the like.

### PRIOR ART DISCUSSION

PCT Application WO 2014/183474 A1 and European Patent Application EP 3051897 A1 disclose a method and system for allocating random access channel resources, wherein the method includes the following steps: a first node sending random access channel configuration information through a downlink channel, wherein the information includes at least configuration information of a random access channel allocated to a second node.

### SUMMARY

### TECHNICAL PROBLEM

In some cases, the MTC device is different from a user equipment (UE), such as a portable telephone or a smartphone, and is installed in a place where a wireless environment is not satisfactory due to a wireless radio wave being difficult to reach when compared with an outdoor environment where the view is unobstructed, for example, in a building or a basement.

For this reason, in some cases, it is preferable that, for the MTC device, for example, a typical radio service area (may be referred to as "coverage") that is provided by à base station can be enhanced (this is referred to as coverage enhancement (CE)).

Furthermore, when many MTC devices individually make connections to the base station and perform data transmission, the processing capacity of the base station is insufficient, or the efficiency of utilization of a radio resource is reduced. For this reason, in some cases, a relay node that relays data transmission among a plurality of MTC devices to the base station is positioned in a wireless communication system.

In this case, the MTC device performs transmission to the destination relay node, without performing direct communication to the destination base station. In other words, the MTC device performs direct uplink (UL) transmission to the destination base station in a limited manner.

For this reason, for example, the base station has difficulty in receiving information on received quality or the like of a signal that is received by the MTC device, directly from the MTC device. In some cases, the information on the received quality or the like of the signal that is received by the MTC device from the base station is used for the base station to determine a level (CE level) of coverage enhancement of downlink (DL).

Therefore, failure of the base station to receiving information that is used for the determination of the CE level directly from the MTC device can lead to failure to determine a suitable CE level for the MTC device and thus to provide the coverage enhancement of suitable DL.

An object of an aspect of a technology that is disclosed in the present specification is such that suitable coverage enhancement level can be determined for a wireless equipment that performs UL communication to a base station in a limited manner.

### Solution to Problem

The invention is defined in the independent claims, to which reference should now be made. Advantageous embodiments are set out in the sub claims.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### Advantageous Effects of Invention

According to an aspect of a technology, suitable coverage enhancement level can be determined for a wireless equipment that performs communication for uplink to a base station.

### BRIEF DESCRIPTION OF DRAWINGS

FIG. 1 is a diagram illustrating an example of a wireless communication system according to an embodiment.
FIG. 2 is a sequence diagram illustrating an example of operation of a wireless communication system according to a first embodiment, which is illustrated in FIG. 1.
FIG. 3 is a diagram illustrating an example of information that is associated with a coverage enhancement level in accordance with an RSRP according to the embodiment.
FIG. 4 is a block diagram illustrating an example of a configuration of a wireless equipment (MUE) according to the first embodiment.
FIG. 5 is a block diagram illustrating an example of a configuration of a relay node (a relay UE) according to the first embodiment.
FIG. 6 is a block diagram illustrating an example of a configuration of a base station (eNB) according to the first embodiment.
FIG. 7 is a sequence diagram illustrating an example of operation of a wireless communication system according to a modification example of the first embodiment.
FIG. 8 is a sequence diagram illustrating an example of operation of a wireless communication system according to a second embodiment.
FIG. 9 is a block diagram illustrating an example of a configuration of a wireless equipment (MUE) according to the second embodiment.
FIG. 10 is a block diagram illustrating an example of a configuration of a relay node (a relay UE) according to the second embodiment.
FIG. 11 is a block diagram illustrating an example of a configuration of a base station (eNB) according to the second embodiment.

### Description of Embodiments

In some cases, the MTC device is different from a user equipment (UE), such as a portable telephone or a smartphone, and is installed in a place where a wireless environment is not satisfactory due to a wireless radio wave being difficult to reach when compared with an outdoor environment where the view is unobstructed, for example, in a building or a basement.

For this reason, in some cases, it is preferable that, for the MTC device, for example, a typical radio service area (may be referred to as "coverage") that is provided by a base station can be enhanced (this is referred to as coverage enhancement (CE)).

Furthermore, when many MTC devices individually make connections to the base station and perform data transmission, the processing capacity of the base station is insufficient, or the efficiency of utilization of a radio resource is reduced. For this reason, in some cases, a relay node that relays data transmission among a plurality of MTC devices to the base station is positioned in a wireless communication system.

In this case, the MTC device performs transmission to the destination relay node, without performing direct communication to the destination base station. In other words, the MTC device performs direct uplink (UL) transmission to the destination base station in a limited manner.

For this reason, for example, the base station has difficulty in receiving information on received quality or the like of a signal that is received by the MTC device, directly from the MTC device. In some cases, the information on the received quality or the like of the signal that is received by the MTC device from the base station is used for the base station to determine a level (CE level) of coverage enhancement of downlink (DL).

Therefore, failure of the base station to receiving information that is used for the determination of the CE level directly from the MTC device can lead to failure to determine a suitable CE level for the MTC device and thus to provide the coverage enhancement of suitable DL.

An object of an aspect of a technology that is disclosed in the present specification is such that suitable coverage enhancement level can be determined for a wireless equipment that performs UL communication to a base station in a limited manner.

Embodiments will be described below with reference to the drawings. However, the embodiments that will be described below are given as only examples, and this is not intended to exclude various modifications or applications of the technology that will not be specified below. Furthermore, various exemplary embodiments that will be described below may be implemented in suitable combinations. It is noted that, in the drawings that are referred to when the embodiments are described below, portions that are given the same reference numeral are the same or similar, except as otherwise specified.

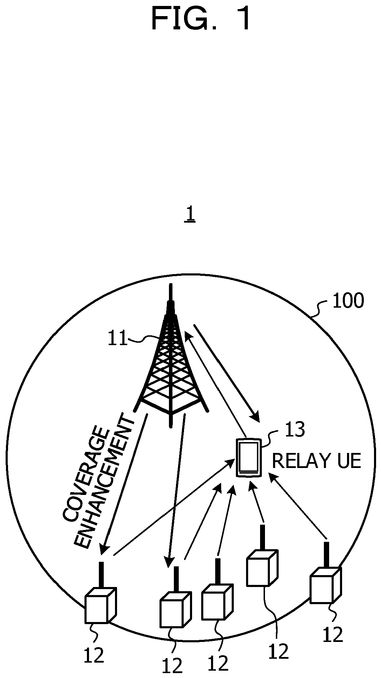

FIG. 1 is a diagram illustrating an example of a wireless communication system according to an embodiment. As an example, a wireless communication system 1 that is illustrated in FIG. 1 may include a base station 11, a plurality of User Equipments (UEs) 12, and a relay UE 13.

The base station 11 forms a radio area 100. One base station 11 may form one radio area 100 and may form a plurality of radio areas 100. The radio area 100 is determined according to a range (which may be referred to as "coverage") where a wireless radio wave that is transmitted by the base station 11 propagates.

The "radio area" may be referred to as a "cell", a "coverage area", or a "communication area". The "cell" may be divided into "sector cells".

The base station 11 may be referred as to a "base station (BS)", a "node B (NB)", or an "enhanced NB (eNB)".

In a case where the UE 12 and the relay UE 13 are positioned within the radio area 100, it is possible that the UE 12 and the relay UE 13 communicates wirelessly with the base station 11. The UE 12 and the UE 13 are an example of wireless equipments. The UEs 12 and 13 may be referred to as wireless equipments, mobile terminals, or terminal devices.

The UE 12 may be a sensor device, a meter (a measuring instrument), or the like that has a wireless communication function, which forms a sensor network, as a non-limited example. The relay UE 13 may be a portable telephone, a smartphone, or the like, as a non-limited example.

For convenience, wireless communication between the eNB 11 and the UEs 12 and 13 may be referred to as a "cellular communication". As an example, a wireless communication scheme in compliance with Long Term Evolution (LTE) or LTE-Advanced of the 3rd Generation Partnership Project (3GPP) may be applied to the "cellular communication". For convenience, a signal for the cellular communication may be referred to as a cellular signal for short.

However, the UE 12 does not directly transmit a signal destined for the eNB 11 and transmits the signal via the relay UE 13. In other words, uplink (UL) communication from the UE 12 to the eNB 11 may be performed via the relay UE 13.

In contrast, downlink (DL) communication from the eNB 11 to the UE 12 may be performed via the relay UE 13 and may be directly performed without the relay UE 13 being involved. In other words, not only can the UE 12 receive a signal that is transmitted by the eNB 11, via the relay UE 13, but the UE 12 can also receive the signal directly.

UL communication by the UE 12 is relayed by the relay UE 13 to the eNB 11, and thus, in a case where a signal destined for the base station 11 is directly transmitted, the UE 12 can also perform the UL communication at the low power.

Furthermore, if a radio resource for UL and DL is allocated to the relay UE 13, the eNB 11 gets along without individually allocating a radio resource for the UL communication to many UEs 12. Therefore, the efficiency of utilization of the radio resource for the UL communication can be improved.

In some cases, communication between the UE 12 and the relay UE 13, as already described, is referred to as "device-to-device (D2D)" communication.

For convenience, the UE 12 may be referred to as a "D2D UE 12", an "MTC UE 12", a "remote MTC UE 12", an "MTC device 12", an "MTCnode 12", or the like. The "MTC UE 12" may be referred to as an "MUE 12" for short. For convenience, the relay UE 13 may be referred to as a "relay node 13".

With IoT, various "things" each can be equipped with a communication function. The "things" each of which is equipped with the communication function can be equivalent to the MTC UEs 12. For this reason, the number of MTC UEs 12 that can make connections to a wireless access network such as LTE can also be increased.

In the case of the MTC device 12 such as a sensor device or a measuring instrument, an amount of data that is transmitted by an individual MTC device per one time tends to decrease when compared with the UE such as a portable telephone or a smartphone.

For this reason, in some cases, the MUE 12 is also referred to as a low-cost (LC-) MTC device 12, and, in some cases, MTC that is performed by the LC-MTC device 12 is also referred to as LC-MTC.

In the LC-MTC, each time transmission data occurs in the MUE 12, for example, when the eNB 11 controls a timing for transmission by an individual MUE 12, an amount of consumed resource for a control channel increases.

For example, the eNB 11 can control a transmission time interval (TTI) for an individual MUE 12 by transmitting a timing advance (TA) command on a control channel for the DL, such as a physical downlink control channel (PDCCH).

However, each time a transmission request occurs in the MUE 12 that transmits a small amount of data per one time, when one TTI is controlled with one TA command, the amount of consumed resource for the control channel, which is used for transmission of the TA command, increases.

Accordingly, in LTE, in some cases, a technology that is referred to as a "TTI bundling" is used. In the TTI bundling, the TA command is executed one time, and thus, the UE can be instructed to transmit the same transmission data in succession over a plurality of TTIs. Therefore, the amount of consumed resource for the control channel that is used the transmission of the TA command can be suppressed.

However, when a large number of MUEs 12 are arranged in the wireless communication system 1, the transmission of a large number of TA commands by the eNB 11 is desirable. Accordingly, as already described, the UL communication by the MUE 12 is all directed to the relay UE 13 and is limited to communication via the relay UE 13. Thus, the eNB 11 may transmit the TA command to the relay UE 13 instead of an individual MUE 12.

Incidentally, the MUE 12 is installed in a place where a wireless environment is not satisfactory due to a wireless radio wave being difficult to reach when compared with the outdoor environment where the view is unobstructed, for example, is installed such as in a building or a basement. For this reason, in some cases, it is preferable that, for MUE 12, typical coverage which is provided by the eNB 11 can be enhanced (this is referred to as coverage enhancement (CE)).

For example, in some cases, it is desirable that the coverage is more enhanced to the extent of approximately several dB to several tens of dB (20dB as an example) than the typical coverage in LTE or LTE-advance. Accordingly, as an example of a CE technology, in some cases, a technology referred to as "repetitions" is used.

The "repetitions" is a technology that repeatedly transmits the same signal at different times. For example, the eNB 11 repeats transmission of data signal for the same DL data signal or the same control signal as much as a limited number of times, and thus a rate of reception success in the MUE 12 can be improved. Therefore, coverage for DL communication can be enhanced.

In some cases, the number of times that "reception" is performed is referred to as a "CE level". The CE level may vary from one DL channel to another. For example, the CE level may differ with a data channel for the DL and the control channel for the DL.

An example of the data channel for the DL is a physical downlink shared channel (PDSCH), and an example of the control channel for the DL is that already-described PDCCH.

Regarding the CE level, in a normal case, the eNB 11 receives a result of measurement of DL communication quality in the UE from the UE through the UL communication, and thus, can determine the CE level in accordance with the result of the measurement.

For example, the UE measures a reference signal received power (RSRP) that is a received power of a reference signal (RS) which is transmitted by the eNB 11, and reports the measured RSRP to the base station 11 through the UL communication. It is noted that the "reference signal" may also be referred to as a "pilot signal". The reference signal and the pilot signal are an example of an already-known signal between the transmission side and the reception side.

The eNB 11 determines the CE level in accordance with the RSRP that is reported from the UE, and performs DL transmission to the UE at the determined CE level. It is noted that reference signal received quality (RSRQ) may be used instead of the RSRP. The RSRQ can be expressed as a ratio between the RSRP and a Received Signal Strength Indicator (RSSI).

Furthermore, a Signal to Interference power Ratio (SIR) of the reference signal may be used instead of the RSRP or the RSRQ. Any of the RSRP, the RSRQ, and the SIR is an example of an indicator of received quality of a radio signal, and may also be referred to as "radio quality".

However, as already described, although the MUE 12 can receive a signal for the DL, which is transmitted by the eNB 11, the MUE 12 has difficulty in transmitting a signal for the UL directly to the base station 11.

In other words, use of a UL radio interface (which, in some case, is referred to as a "Uu interface") between the eNB 11 and the MUE 12 is not possible. For this reason, the MUE 12 can neither directly transmit nor directly report information indicating the radio quality such as the RSRP to the destination eNB 11.

Accordingly, in embodiments that will be described below, a technology is provided that reports the information indicating the radio quality received in the MUE 12, explicitly or implicitly from the MUE 12 to the base station 11 via the relay UE 13.

### < First Embodiment>

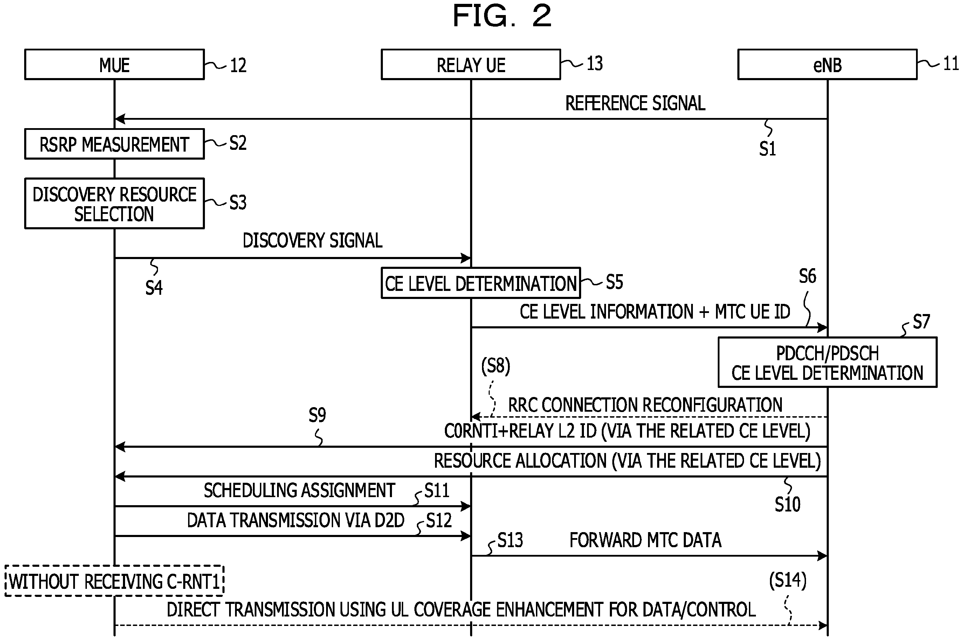

FIG. 2 is a sequence diagram illustrating an example of operation of a wireless communication system 1 according to a first embodiment. An example of the operation that is illustrated in FIG. 2 is an example in which the transmission data occurs in the MUE 12 and in which the data is transmitted to the eNB 11 via the relay UE 13.

As illustrated in FIG. 2, the eNB 11 may transmit an RS for the DL (Step S1). When receiving the RS, the MUE 12 may measure the RSRP (Step S2). When the RSRP is measured, the MUE 12 may determine the CE level from the RSRP for initial access.

The MUE 12 may select a radio resource pool (or may be a radio resource) relating to the CE level, which is used for transmission of a discovery signal (DS) (Step S3). The DS is an example of a signal for searching for and discovering the relay UE 13.

The radio resource (hereinafter referred to simply as a "resource" for short) may be expressed in two-dimensional frequency and time. For example, the radio resource may a resource block (RB). The radio resource pool may be a set of two or more RBs.

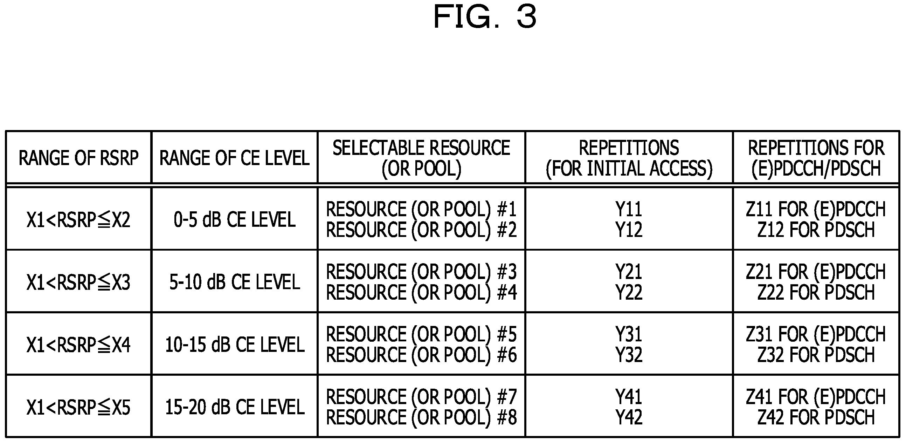

FIG. 3 illustrates an example of a relationship among the RSRP, the CE level, and the resource (or possibly the resource pool). As illustrated in FIG. 3, different resources (or resource pools) may be associated with different CE levels, respectively.

For example, a first entry in a table that is illustrated in FIG. 3 indicates that the CE level in a case where the RSRP is X1 < RSRP ≤ X2 is a CE level of 0 to 5 dB and that resources (or resource pools) # 1 and # 2 are selectable. This is also the same for other entries.

It is noted that in FIG. 3, two resources (or resource pools) per one entry are registered, but that three or more resources (or resource pools) may be registered in one entry. Furthermore, the numbers of resources (or resource pools) that are registered in the entries may be the same and may be different.

Pieces of information that are illustrated in first to third fields in FIG. 3 may be stored in the MUE 12. In other words, pieces of information that are illustrated in fourth and fifth fields in FIG. 3 may not be stored in the MUE 12.

As an example, information (repetitions (for initial access)) that is illustrated in the fourth field may be stored in the relay UE 13 in such a manner that any of the first to third fields which include at least the third field is associated with one or more pieces of information. As an example, information (repetitions for (E) PDCCH/PDSCH) that is illustrated in the fifth field may be stored in the eNB 11 in such a manner that any of the first to fourth fields which include at least the fourth field is associated with one or more piece of information.

The MUE 12, as illustrated in FIG. 2, the DS may be transmitted using the selected resource pool (or resource) (Step S4). An identification information (ID) of the MUE 12 may be included in the DS.

When the relay UE 13 receives the DS that is transmitted by the MUE 12, the relay UE 13 may acquire or determine information relating to the CE level of the MUE 12 by decoding the received DS (Step S5).

The "information relating to the CE level" may be information that possibly specifies the CE level, may be information indicating the CE level explicitly (or directly), and may be information indicating the CE level implicitly (or indirectly). In some cases, the "information relating to the CE level" is hereinafter referred to as a "CE level information" for short.

For example, the relay UE 13 may determine the number of repetitions that corresponds to the resource (or the resource pool), from information on the resource (or the resource pool) which is used for the transmission of the DS. In an example in FIG. 3, the numbers Y11 and Y 12 of repetitions are associated with resources (or resource pools) # 1 and # 2, respectively. This is also true for other entries.

The relay UE 13 may perform transmission (which may be referred to as "notification") of information relating to the determined number of repetitions to the eNB 11, along with an ID of the MUE 12 (Step S6). The information relating to the number of repetitions is an example of the CE level indicating the CE level information of the MUE 12 implicitly (or indirectly).

A physical random access channel (PRACH), a physical uplink control channel (PUCCH), a physical uplink shared channel (PUSCH), or the like may be used for notification of the ID of the MUE 12 and the CE level information to the eNB 11.

The PRACH is used in a case where the relay UE 13 initially accesses the eNB 11, or in a case where a radio resource control (RRC) connection between the relay UE 13 and the eNB 11 is re-established.

For example, the relay UE 13 may notify the eNB 11 of the ID of the MUE 12 and the CE level information using a random access (RA) preamble, and may notify the eNB 11 of the ID of the MUE 12 and the CE level information using an RRC connection re-establishment request signal.

In a case where the RRC connection re-establishment request signal is used, the eNB 11 may transmit an RRC connection reconfiguration signal to the relay UE 13 (Step S8). The relay UE 13 receives the RRC connection reconfiguration signal, and thus, possibly transmits the RRC connection re-establishment request signal to the eNB 11.

On the other hand, if an RRC connection between the relay UE 13 and the eNB 11 is completely established and thus the PUCCH or the PUSCH is in an available state, the relay UE 13 may notify the eNB 11 of the ID of the MUE 12 and the CE level information using the PUCCH or the PUSCH.

When acquiring the ID of the MUE 12 of the CE level information, the eNB 11 can determine a CE level of one of, or CE levels of both of, the control channel (for example, the PDCCH) for the DL and the data channel (for example, the PDSCH), which are destined for the MUE 12 (Step S7).

For example, the eNB 11 may determine the number Z of repetitions for one of, or both of, the PDCCH (or an EPDCCH) and the PDSCH that correspond to the information, from the information Y relating to the number of repetitions that is illustrated in FIG. 3.

In the example in FIG. 3, the number Z11 of repetitions for the PDCCH or the EPDCCH and the number Z12 of repetitions for the PDSCH are associated with the numbers Y11 and Y12 of repetitions, respectively. This is also the same for other entries.

The eNB 11 notifies the MUE 12 of information relating to the determined number Z of repetitions, for example, with signaling for the DL. Furthermore, the eNB 11 may transmit a C-RNTI and an identifier (relay UE L2 ID) of Layer 2 of the relay UE 13 to the destination MUE 12, with the determined number (in other words, the CE level) of repetitions (Step S9 in FIG. 2).

The "C-RNTI" is an acronym for "cell-radio network temporary identifier" and is an example of a temporary cell identifier that is allocated by the eNB 11 to the MUE 12. As an example, the PDSCH that is an example of the data channel for the DL may be used for the transmission of the C-RNTI and the relay UE Layer 2 ID.

For example, the eNB 11 may notify the MUE 12 of the C-RNTI and the relay UE Layer 2 ID using a random access response message that is transmitted to the MUE 12 on the PDSCH.

It is noted that a network relay is a Layer 3 relay, but can be enhanced for a Layer 2 relay in order to assist the eNB 11. For this reason, the eNB 11 may transmit an ID of Layer 2 to the destination MUE 12.

In the Layer 2 relay, a radio (RF) signal that is received is demodulated and decoded, and then, an RF signal that results from coding and modulating the received radio signal back may be transmitted. In the Layer 2 relay, because the reception signal is coded and modulated back, an effect of reducing degradation in reception performance due to other cell interference and noise amplification can be expected. In the Layer 2 relay, re-transmission processing of or transfer processing of user data may be unnecessary.

The eBN 11 may transmit information on allocation of a resource that is used by the MUE 12 for D2D communication with the relay UE 13, to the destination MUE 12 with the determined number (in other words, the CE level) of repetitions (Step S10 in FIG. 2).

As an example, the allocation of the D2D resource may be performed according to "Mode 1" that is specified in "3GPP Release 12". "Mode 1" is also referred to as "scheduled resource allocation".

In "Mode 1", the MUE 12 performs a request for allocation of a resource to the eNB 11, in a state where the RRC connection to the eNB 11 is established.

When the request is received, the eNB 11 schedules a resource that is used for transmission and reception of a control channel and a data channel for a physical sidelink with the MUE 12 that is a source of the request.

The MUE 12 transmits "ProSE BSR" to the eNB 11, and thus notifies the eNB 11 of information relating to an amount of data that is desired to be transmitted directly to the eNB 11, and then, transmits a scheduling request (SR) to the destination eNB 11.

"ProSE BSR" is an acronym for "proximity-based services buffer status report". The SR may be transmitted on an individual channel (the SR in this case referred to as a dedicated SR) and may be transmitted on a random access channel.

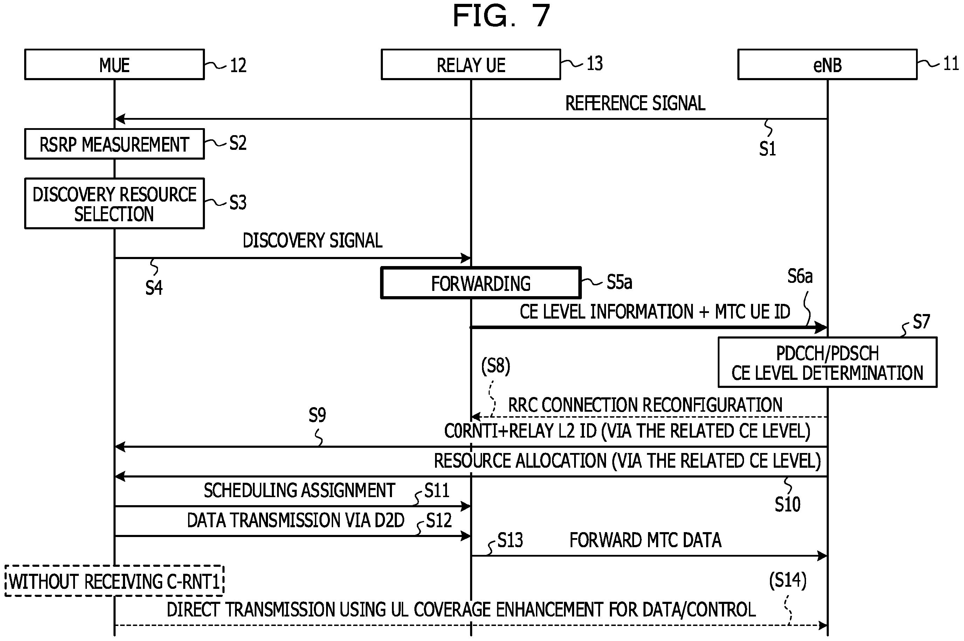

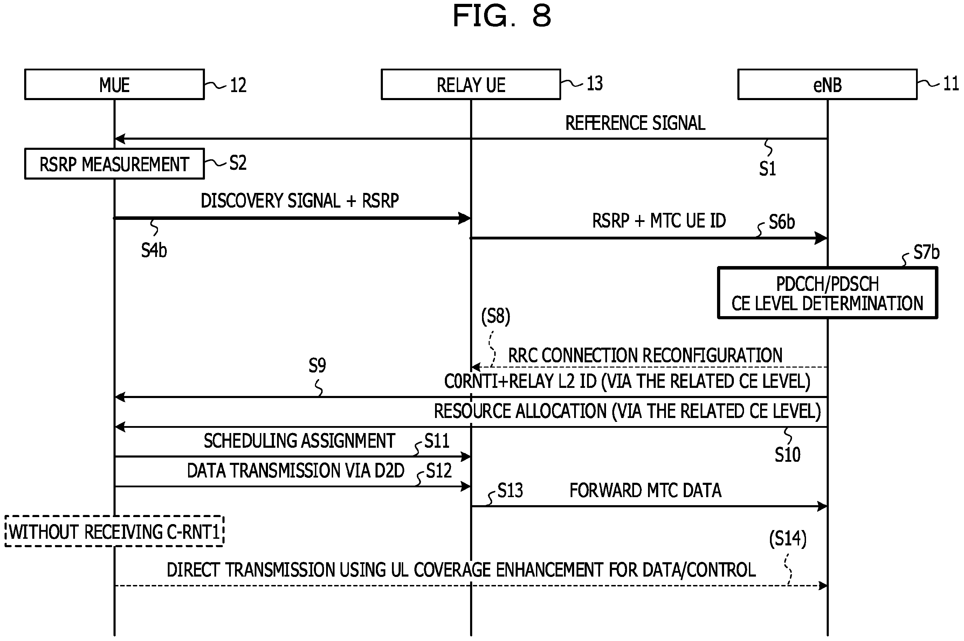

Based on "ProSE BSR" that is received from the MUE 12, the eNB 11 schedules a resource commensurate with an amount of data that the MUE 12 desires to transmit. It is noted that in Step S10 that is illustrated in FIGs. 7 and 8, which will be described below, the allocation of the D2D resource may be performed according to "Mode 1".

As an example, the PDCCH that is an example of the control channel for the DL may be used for transmission of the information on the allocation of the resource (which, for convenience, may be referred to as "D2D resource") that is used for the D2D communication. It is noted that Step S9 and Step S10 may be integrated into one step (this is also the same for FIG. 8 in a second embodiment that will be described below).

The MUE 12 may transmit a scheduling assignment (SA) message to the destination relay UE 13 according to information on allocation of the D2D resource (Step S11), and then, may transmit a data signal for the D2D communication to the relay UE 13 (Step S12). As an example, SA indicates frequency-domain and time-domain position of a reception resource that is associated with a physical channel which is carried by a transmission data signal of the MUE 12.

The relay UE 13 may transmit (transfer) the data signal that is received from the MUE 12, to the destination eNB 11 (Step S13).

It is noted that there can be a case where the MUE 12 has difficulty in normally receiving the C-RNTI that is transmitted by the eNB 11 in Step S9. In this case, the MUE 12 may make an attempt to transmit the control signal or the data signal directly to the destination eNB 11 using a UL CE technology (for example, repetition) (Step S14).

As described above, according to the first embodiment, in the case of the MUE 12 in which direct UL communication to the eNB 11 is not available (in other words, is limited), the CE level information of the MUE 12 can also be notified to the eNB 11 by way of the relay UE 13.

Therefore, the eNB 11 can determine the CE level that is suitable for each channel, such as the control channel for the DL or the data channel dedicated for the MUE 12. Consequently, it is possible that a CE for suitable DL is realized for and is provided to the MUE 12 which performs the direct UL communication to the eNB 11 in a limited manner.

As a result, for example, although the MUE 12 is positioned in a place where a radio wave environment is not satisfactory, the MUE 12 can suitably perform the DL communication the UL communication with the eNB 11.

Consequently, although the MUE 12 is positioned in the place where the radio wave environment is not satisfactory, special transmission control or reception control ends up being not performed, and thus a reduction in power consumption by the MUE 12 or low cost of the MUE 12 can be achieved.

Furthermore, according to the first embodiment, because the MUE transmits the DS to the relay UE 13, with a resource (or resource pool) that is associated with the CE level in accordance with the RSRP, the MUE 12 may not transmit a value of, or information on, the RSRP or the CE level. Therefore, the resource does not have to be consumed in order to transmit the value of, or the information on, the RSRP or the CE level.

< Examples of Configurations of the MUE, the Relay UE, and the eNB>

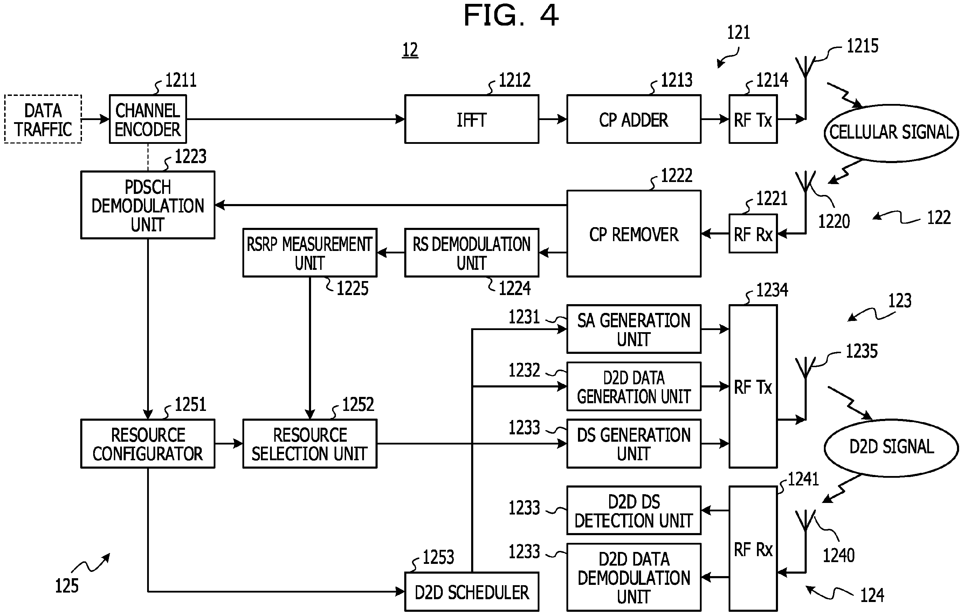

Next, examples of configurations of the MUE 12, the relay UE 13, and the eNB 11, which are described above, will be described below with reference to FIGs. 4 to 6.

### < Example of the Configuration of the MUE 12>

FIG. 4 is a block diagram illustrating an example of the configuration of the MUE 12. As illustrated in FIG. 4, as an example, the MUE 12 may include a transmission processing unit 121 and a reception processing unit 122, which are dedicated for the cellular communication, a transmission processing unit 123 and a reception processing unit 124, which are dedicated from the D2D communication, and a control unit 125.

As an example, the transmission processing unit 121 dedicated for the cellular communication may include a channel encoder 1211, an Inverse Fast Fourier Transformer (IFFT) 1212, a cyclic prefix (CP) adder 1213, and a radio (RF) transmission unit 1214, and a transmission antenna 1215.

As an example, the channel encoder 1211 channel-codes data traffic that is transmitted through the UL cellular communication.

As an example, the IFFT 1212 performs Inverse Fast Fourier Transform (IFFT) on the channel-coded data traffic. The data traffic that is a signal (for example, a baseband signal) in the frequency domain is converted by the IFFT into a signal in the time domain.

As an example, the CP adder 1213 adds a CP to the signal in the time domain, which is obtained in the IFFT 1212. With the addition of the CP, interference between transmission signal symbols or interference between subcarriers can be suppressed.

As an example, the RF transmission unit 1214 converts a transmission baseband signal, to which the CP is added, into a radio frequency and transmits the radio frequency through the transmission antenna 1215.

On the other hand, as an example, the reception processing unit 122 dedicated for the cellular communication may include a reception antenna 1220, an RF reception unit 1221, a Cyclic Prefix (CP) remover 1222, a PDSCH demodulation unit 1223, an RS demodulation unit 1224, and an RSRP measurement unit 1225.

As an example, the RF reception unit 1221 converts a radio signal for the cellular communication for the DL, which is received through the reception antenna 1220, into a baseband signal.

As an example, the CP remover 1222 removes the CP that is added to the reception baseband signal.

As an example, the PDSCH demodulation unit 1223 demodulates a signal on the PDSCH that is an example of the data channel for the DL, from the reception baseband signal from which the CP is removed.

As an example, the RS demodulation unit 1224 demodulates the reference signal (RS) from the reception baseband signal from which the CP is removed.

As an example, the RSRP measurement unit 1225 measures the RSRP that is the received power of the RS that results from the demodulation in the RS demodulation unit 1224.

Furthermore, as an example, the transmission processing unit 123 dedicated for the D2D communication may include a schedule assignment (SA) generation unit 1231, a D2D data generation unit 1232, a discovery signal (DS) generation unit 1233, and an RF transmission unit 1234, and a transmission antenna 1235.

As an example, the SA generation unit 1231 generates the already-described SA.

As an example, the D2D data generation unit 1232 generates the data signal for the D2D communication. The data may be referred to as a "D2D data signal".

As an example, the DS generation unit 1233 generates the already-described discovery signal (DS) for searching for and discovering the relay UE 13.

As an example, the RF transmission unit 1234 converts a signal that is generated by each of the generation units 1231 to 1233 described above, into a radio frequency signal, and transmits the radio frequency signal from the transmission antenna 1235.

A block that includes the DS generation unit 1233 and the RF transmission unit 1234 may be taken as an example of a transmission unit that transmits the DS.

On the other hand, as an example, the reception processing unit 124 dedicated for the D2D communication may include a reception antenna 1240, an RF reception unit 1241, a D2D DS detection unit 1242, and a D2D data demodulation unit 1243.

The RF reception unit 1241 converts the radio signal for the D2D communication, which is received in the reception antenna 1240, into a baseband signal.

As an example, the D2D DS detection unit 1242 detects a DS, which is transmitted by any other UE 12, from the reception baseband signal.

As an example, the D2D data demodulation unit 1243 demodulates the D2D data signal from the reception baseband signal.

As an example, the control unit 125 of the MUE 12 may include a resource configurator 1251, a discovery resource selection unit 1252, and a D2D scheduler 1253.

As an example, the resource configurator 1251 performs configuration of the resource that is used for the D2D communication, based on resource allocation information that is obtained in the signal that results from the demodulation in the PDSCH demodulation unit 1223.

The discovery resource selection unit 1252, for example, as described with reference to FIGs. 2 and 3, performs selection of a resource (or resource pool) that is used from DS transmission, based on the RSRP that is measured in the RSRP measurement unit 1225. With the selected resource (or resource pool), the DS that is generated in the DS generation unit 1233 is transmitted from the transmission antenna 1235.

For this reason, pieces of information in the first to third field in the table that is illustrated in FIG. 3 may be stored in the discovery resource selection unit 1252. In other words, the discovery resource selection unit 1252 may include a storage unit in which information on a resource (or resource pool) for the CE level in accordance with the RSRP is stored. However, the storage unit may be provided within the MUE 12 in such a manner that the discovery resource selection unit 1252 possibly accesses the storage unit.

As an example, the D2D scheduler 1253 performs scheduling of the D2D resource that is used for the transmission of each of the already-described SA, the D2D data signal, and the DS, according to the resource configuration by the resource configurator 1251.

### < Example of the Configuration of the Relay UE 13>

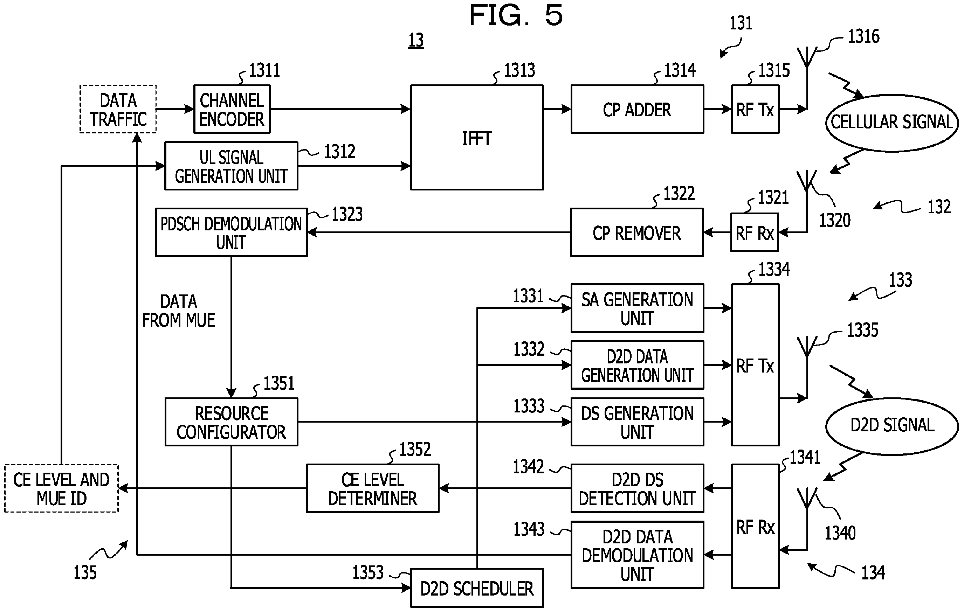

FIG. 5 is a block diagram illustrating an example of the configuration of the relay UE 13. As illustrated in FIG. 5, as an example, the relay UE 13 may include a transmission processing unit 131 and a reception processing unit 132, which are dedicated for the cellular communication, a transmission processing unit 133 and a reception processing unit 134, which are dedicated from the D2D communication, and a control unit 135.

As an example, the transmission processing unit 131 dedicated for the cellular communication may include a channel encoder 1311, a UL signal generation unit 1312, an IFFT 1313, a CP adder 1314, an RF transmission unit 1315, and a transmission antenna 1316.

As an example, the channel encoder 1311 channel-codes the data traffic that is transmitted through the cellular communication for the UL. Traffic of the D2D data signal that is received in the reception processing unit 134 dedicated for the D2D communication may be included in data traffic that is coded in the channel encoder 1311, which is not limited to the data traffic that is generated in the relay UE 13.

As an example, the UL signal generation unit 1312 generates the signal (for example, a PRACH signal, the RRC connection re-establishment request signal, a PUCCH signal, the PUSCH signal, or the like) for the UL, which is destined for the eNB 11.

As illustrated in Step S6 in FIG. 2, in a case where the CE level information and the ID of the MUE 12 are notified to the eNB 11 using the PRACH, the UL signal generation unit 1312 may generate the PRACH signal that includes an RA preamble which includes the CE level information and the ID of the MUE 12.

In a case where the CE level information and the ID of the MUE 12 are notified to the eNB 11 using the RRC connection re-establishment request signal, the UL signal generation unit 1312 may generate the RRC connection re-establishment request signal that includes an information set that contains these.

In a case where the CE level information and the ID of the MUE 12 are notified to the eNB 11 using the PUCCH, the UL signal generation unit 1312 may generate the PUCCH signal that includes the information set that contains these.

In a case where the CE level information and the ID of the MUE 12 are notified to the eNB 11 using the PUSCH, the UL signal generation unit 1312 may generate the PUSCH signal that includes the information set that contains these.

As an example, the IFFT 1313 performs the IFFT on output signals of the channel encoder 1311 and the UL signal generation unit 1312, and thus, converts the output signals from signals in the frequency domain into signals in the time domain.

The CP adder 1314 adds the CP to the transmission baseband signal in the time domain, which is an output signal of the IFFT 1313.

As an example, the RF transmission unit 1315 converts the transmission baseband signal, to which the CP is added, into a radio frequency and transmits the radio frequency through the transmission antenna 1316.

On the other hand, as an example, the reception processing unit 132 dedicated for the cellular communication may include a reception antenna 1320, a RF reception unit 1321, a CP remover 1322, and a PDSCH demodulation unit 1323.

As an example, the RF reception unit 1321 converts the radio signal for the cellular communication for the DL, which is received through the reception antenna 1320, into a baseband signal.

As an example, the CP remover 1322 removes the CP that is added to the reception baseband signal.

As an example, the PDSCH demodulation unit 1323 demodulates the signal on the PDSCH that is an example of the data channel for the DL, from the reception baseband signal from which the CP is removed.

As an example, the transmission processing unit 133 dedicated for the D2D communication may include an SA generation unit 1331, a D2D data generation unit 1332, a DS generation unit 1333, and an RF transmission unit 1334, and a transmission antenna 1335.

As an example, the SA generation unit 1331 generates the SA.

As an example, the D2D data generation unit 1332 generates the D2D data signal.

As an example, the DS generation unit 1333 generates the discovery signal (DS) for searching for and discovering the UE 12 or any other UE 13.

As an example, the RF transmission unit 1334 converts a signal that is generated by each of the generation units 1331 to 1333 described above, into a radio frequency signal, and transmits the radio frequency signal from the transmission antenna 1335.

On the other hand, as an example, the reception processing unit 134 dedicated for the D2D communication may include a reception antenna 1340, an RF reception unit 1341, a D2D DS detection unit 1342, and a D2D data demodulation unit 1343.

The RF reception unit 1341 converts the radio signal for the D2D communication, which is received in the reception antenna 1340, into a baseband signal.

As an example, the D2D DS detection unit 1342 detects a DS, which is transmitted by the UE 12 or any other UE 13, from the reception baseband signal.

A block that includes the RF reception unit 1341 and the D2D DS detection unit 1342 is taken as an example of a reception unit that receives the DS which is transmitted by the MUE 12.

As an example, the D2D data demodulation unit 1343 demodulates the D2D data signal from the reception baseband signal. The demodulated D2D data signal may be channel-coded in the channel encoder 1311, and the resulting signal may be transmitted from the transmission antenna 1316 to the destination eNB 11.

As an example, the control unit 135 of the relay UE 13 may include a resource configurator 1351, a CE level determiner 1352, and a D2D scheduler 1353.

As an example, the resource configurator 1351 performs the configuration of the resource that is used for the D2D communication, based on resource allocation information that is obtained in the signal that results from the demodulation in the PDSCH demodulation unit 1323.

As an example, the CE level determiner 1352, as already described with reference to Step S5 in FIG. 2 and FIG. 3, determines the CE level information of the MUE 12, based on the DS that is detected in the D2D DS detection unit 1342.

The information set that contains the determined CE level information and the ID of the MUE 12 may be provided to the UL signal generation unit 1312.

As an example, the D2D scheduler 1353 performs the scheduling of the D2D resource that is used for the transmission of each of the already-described SA, the data signal, and the DS, according to the resource configuration by the resource configurator 1351.

### <Example of the Configuration of the eNB 11>

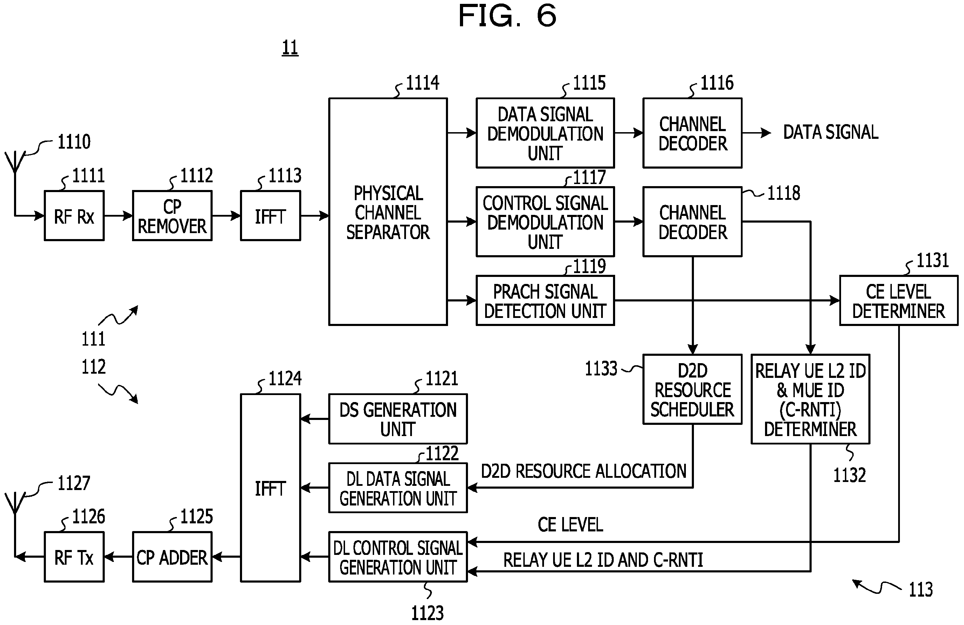

FIG. 6 is a block diagram illustrating an example of the configuration of the eNB 11. As illustrated in FIG. 6, as an example, the eNB 11 may include a UL reception processing unit 111, a DL transmission processing unit 112, and a control unit 113.

As an example, the reception processing unit 111 may include a reception antenna 1110, an RF reception unit 1111, a CP remover 1112, a Fast Fourier Transformer (FFT) 1113, and a physical channel separator 1114. Furthermore, the reception processing unit 111 may include a data signal demodulation unit 1115, a control signal demodulation unit 1117, channel decoders 1116 and 1118, and a PRACH signal detection unit 1119.

The RF reception unit 1111 converts a radio signal for the cellular communication for the UL, which is received through the reception antenna 1110, into a baseband signal.

As an example, the CP remover 1112 removes the CP that is added to the reception baseband signal.

As an example, the FFT 1113 performs Fast Fourier Transform (FFT) on the reception baseband signal from which the CP is removed, and thus converts the reception baseband signal from a signal in the time domain and a signal in the frequency domain.

As an example, the physical channel separator 1114 separates the reception baseband signal in the post-FFT frequency domain into signals for physical channels for the UL. Examples of the physical channel for the UL include the PUSCH, the PUCCH, and the PRACH.

The PUSCH is an example of the data channel for the UL. The PUCCH is an example of the control channel of the UL.

As an example, the data signal demodulation unit 1115 demodulates data channel signal that results from the separation in the physical channel separator 1114.

As an example, the channel decoder 1116 decodes the data channel signal that is demodulated in the data signal demodulation unit 1115.

As an example, the control signal demodulation unit 1117 demodulates a control channel signal (which may be referred to as a "control signal"), which results from the separation in the physical channel separator 1114.

As an example, the channel decoder 1118 decodes the control signal that results from the demodulation in the control signal demodulation unit 1117.

As an example, the PRACH signal detection unit 1119 detects a signal on the PRACH (for example, the RA preamble) that results from the separation in the physical channel separator 1114.

On the other hand, as an example, the DL transmission processing unit 112 may include an RS generation unit 1121, a DL data signal generation unit 1122, a DL control signal generation unit 1123, an IFFT 1124, a CP adder 1125, an RF transmission unit 1126, and a transmission antenna 1127.

As an example, the RS generation unit 1121 generates the RS.

A block that includes the RS generation unit 1121, the IFFT 1124, the CP adder 1125, and the RF transmission unit 1126 may be taken as an example of a transmission unit that transmits the RS.

As an example, the DL data signal generation unit 1122 generates the DL data signal (for example, a PDSCH signal). The DL data signal may be generated based on information on allocation of the D2D resource by the D2D resource scheduler 1133 of the control unit 113, which will be described below.

As an example, the DL control signal generation unit 1123 generates a DL control signal (for example, a PDCCH signal). The C-RNTI and the relay UE Layer 2 ID, which are already described with reference to Step S9 in FIG. 2, may be included in the DL control signal. Furthermore, the information relating to the CE level that is determined in a CE level determiner 1131 of the control unit 113, which will be described below, may be included in the DL control signal.

As an example, the IFFT 1124 performs the IFFT on signals that are generated in the generation units 1121 to 1123 described above, and performs signal conversion from the frequency domain to the time domain.

As an example, the CP adder 1125 adds a CP to the signal in the time domain, which is obtained in the IFFT 1124.

As an example, the RF transmission unit 1126 converts the signal (the transmission baseband signal), to which the CP is added in the CP adder 1125, into a radio frequency and transmits the radio frequency through the transmission antenna 1127.

As an example, the control unit 113 of the eNB 11 may include a CE level determiner 1131, a relay UE Layer 2 (L2) ID and C-RNTI determiner 1132, and a D2D resource scheduler 1133.

As an example, as already described with reference to Step S7 in FIG. 2 and FIG. 3, the CE level determiner 1131 determines the CE level for one of, or both of, the control channel for the DL and the data channel, based on the information that is acquired from the reception signal (for example, the PRACH signal) from the relay UE 13.

As an example, the relay UE Layer 2 ID and C-RNTI determiner 1132 determines pieces of information (for example, the relay UE Layer 2 ID and the C-RNTI) that are notified to the MUE 12 in Step S9 in FIG. 2, based on the control signal that results from the decoding in the channel decoder 1118.

As an example, the D2D resource scheduler 1133 determines the information (for example, the information on the allocation of the D2D resource) that is notified to the MUE 12 in Step S10 in FIG. 2, based on the control signal that results from the decoding in the channel decoder 1118.

### <Modification Example of the First Embodiment>

In the first embodiment that is described above with reference to FIG. 2, in the relay UE 13 (Step S5), the number Y of repetitions that indicates the CE level of the MUE 12 indirectly is determined based on the DS that is received from the MUE 12.

In the second embodiment, for example, as illustrated in FIG. 7, the relay UE 13 may transfer the CE level information that is acquired by decoding the received DS, to the eNB 11, along with the ID of the MUE 12, without determining the number Y of repetitions (Steps S5a and S6a).

For example, the relay UE 13 may transfer information on a resource (or resource pool) that is used for the MUE 12 to transmit the DS, to the eNB 11 along with the ID of the MUE 12.

In this case, in the eNB 11, the number Z of repetitions for one of, or both of, the PDCCH (or the EPDCCH) and the PDSCH, which correspond to the information, may be determined from information on a resource (or resource pool) that is illustrated in FIG. 3.

In the example in FIG. 3, the number Z11 of repetitions for the PDCCH or the EPDCCH and the number Z12 of repetitions for the PDSCH are associated with resources (or resource pools) # 1 and # 2. This is also the same for other entries.

Other operation examples (Step S1 to S4 and S7 to S14) in FIG. 7 may be the same as those that are already described with reference to FIG. 2.

It is noted that in the modification example of the first embodiment, an example of a configuration of the MUE 12 may be the same as the example of the configuration that is illustrated in FIG. 4.

In an example of a configuration of the relay UE 13, the CE level determiner 1352 may be unnecessary in the example of the configuration that is illustrated in FIG. 5. Alternatively, an information set that contains the information on the resource (or resource pool) that is used for the MUE 12 to transmit the DS, which is detected in the D2D DS detection unit 1342, and the ID of the MUE 12 may be included in the UL signal (for example, the PRACH signal) destined for the eNB 11.

Regarding an example of a configuration of the eNB 11, in the example of the configuration that is illustrated in FIG. 6, the CE level determiner 1131 may determine the number Z of repetitions, as described above, based on the information on the resource (or resource pool) that is transferred by the relay UE 13.

According to the modification example of the first embodiment, the same operation and effect as in the first embodiment are obtained. Additionally, because in the relay UE 13, the CE level information may not be determined based on the DS that is received from the MUE 12, the configuration or the operation of the relay UE 13 can be simplified when compared with the first embodiment. Therefore, low power consumption by the relay UE 13 and low cost of the relay UE 13 can be achieved.

### <Second Embodiment>

Next, an example of operation of a wireless communication system 1 according to the second embodiment will be described with reference to FIG. 8. In the same manner, as in the first embodiment, an example of the operation that is illustrated in FIG. 8 is an example in which the transmission data occurs in the MUE 12 and in which the data is transmitted to the eNB 11 via the relay UE 13.

When a comparison is made between FIGs. 8 and 2, the difference is that in FIG. 8, Step S3 and S5 that are illustrated in FIG. 2 are unnecessary. For this reason, in FIG. 8, Steps S4, S6, and S7 that are illustrated in FIG. 2 are replaced with Steps S4b, S6b, and S7b, respectively.

That is, in the same manner as in the first embodiment, when the RSRP indicating that the received power of the RS that is received from the eNB 11 is measured (Steps S1 and S2), the MUE 12 may transmit the ID of the MUE 12 and the measured RSRP in a state of being included in the DS (Step S4b).

The resource (or resource pool) that is used for the transmission of the DS may be selected depending on the RSRP in the same manner as in the first embodiment, and may be selected according to any rule (for example, randomly) without depending on the RSRP.

When receiving the DS that is transmitted by the MUE 12, the relay UE 13 may transmit (in other words, transfer) an information set that contains the ID of the MUE 12 and the RSRP, which is included in the DS, to the destination eNB 11 (Step S6b).

For the transfer of the information set, in the same manner as in the first embodiment, the RA preamble, the RRC connection re-establishment request signal, the PUCCH signal, the PUSCH signal, and the like may be used.

In the eNB 11, for example, pieces of information in the first field and the fifth field in the table in FIG. 3 may be stored in the storage unit. Accordingly, based on the RSRP in the information set that is transferred from the relay UE 13, the eNB 11 can determine the number Z of repetitions for one of, or both of, the PDCCH (or the EPDCCH) and the PDSCH, which correspond to the RSRP (Step S7b).

It is noted that processing operations in Steps S8 to S14 in FIG. 8 may be the same as the processing operations, respectively, in Steps S8 to S14 that are illustrated in FIG. 2 in the first embodiment.

As described above, in the second embodiment, the same operation and effect as in the first embodiment are also obtained. Additionally, in the second embodiment, in the MUE 12, selection of the resource (or resource pool) associated with the CE level in accordance with the RSRP may not be performed. For this reason, when compared with the first embodiment, the configuration or the operation of the MUE 12 can be simplified as will be described below, and the low power consumption by the MUE 12 or the low cost of the MUE 12 can be achieved.

### < Examples of configurations of the MUE, the relay UE, and the eNB>

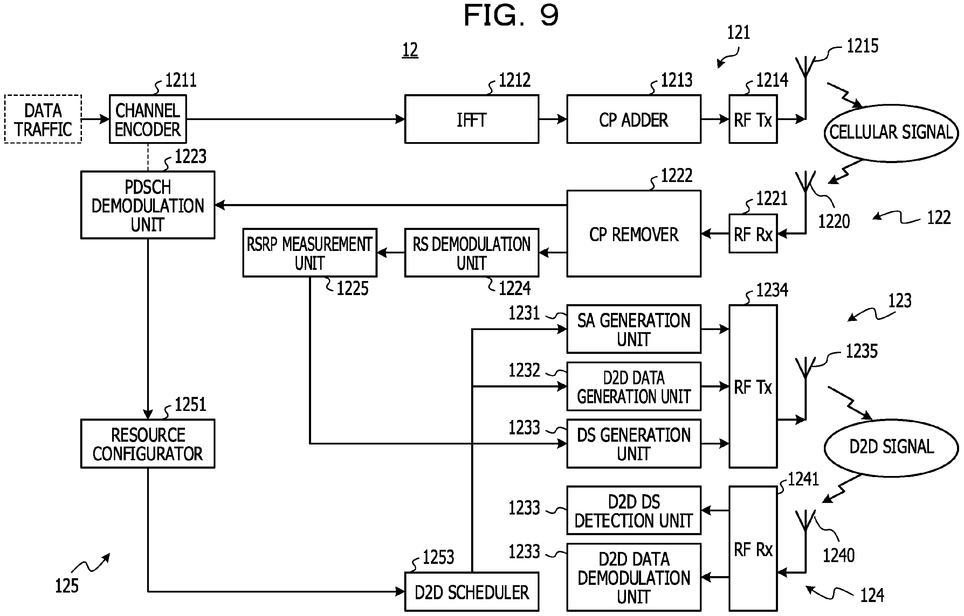

Next, examples of configurations of the MUE 12, the relay UE 13, and the eNB 11 according to the second embodiment will be described with reference to FIGs. 9 to 11.

### < Example of the Configuration of the MUE 12>

FIG. 9 is a block diagram illustrating an example of the configuration of the MUE 12 according to the second embodiment. The difference is that in the example of the configuration which is illustrated in FIG. 9, the discovery resource selection unit 1252 is unnecessary, when compared with the example of the configuration that is illustrated in FIG. 4 in the first embodiment.

For this reason, in FIG. 9, the RSRP that is measured in the RSRP measurement unit 1225 may be provided to the DS generation unit 1233. The DS generation unit 1233 generates the DS that includes the RSRP. In Step S4b in FIG. 8, the DS is transmitted to the relay UE 13 through the RF transmission unit 1234 and the transmission antenna 1235.

### < Example of the Configuration of the Relay UE 13>

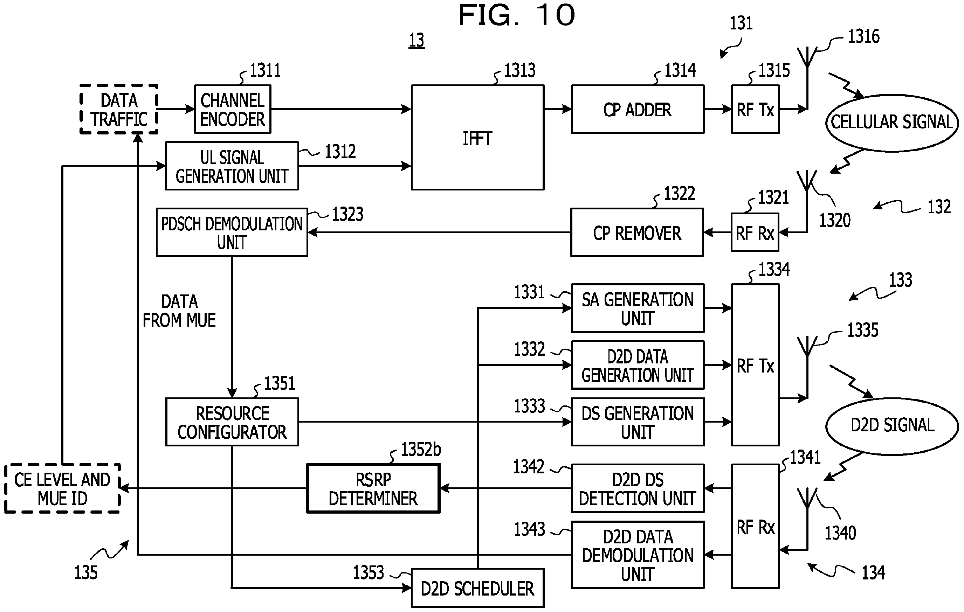

FIG. 10 is a block diagram illustrating an example of the configuration of the relay UE 13 according to the second embodiment. The difference is that in the example of the configuration which is illustrated in FIG. 10, an RSRP value determiner 1352b is included instead of the CE level determiner 1352 in FIG. 5, when compared with the example of the configuration that is illustrated in FIG. 5 in the first embodiment.

As an example, the RSRP value determiner 1352b acquires and determines a value of the RSRP that is included the DS which is detected in the D2D DS detection unit 1342. An information set that contains the value of the RSRP and the ID of the MUE 12 may be provided to the UL signal generation unit 1312.

### <Example of the Configuration of the eNB 11>

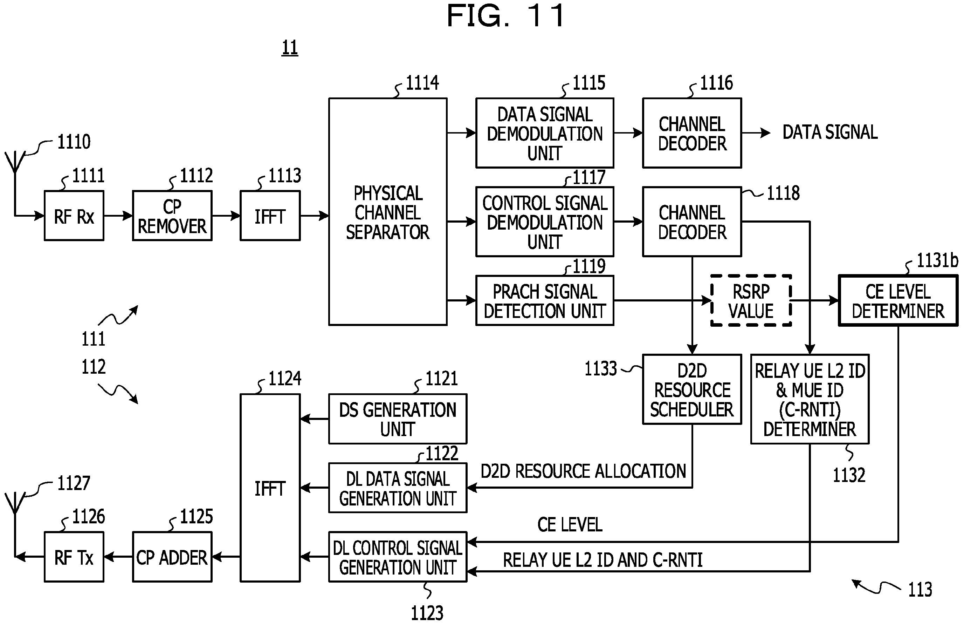

FIG. 11 is a block diagram illustrating an example of the configuration of the eNB 11 according to the second embodiment. The difference is that in the example of the configuration which is illustrated in FIG. 11, a CE level determiner 1131b is included instead of the CE level determiner 1131 in FIG. 6, when compared with the example of the configuration that is illustrated in FIG. 6 in the first embodiment.

The CE level determiner 1131b determines the CE level for one of, or both of, the control channel for the DL and the data channel, based on the value of the RSRP that is acquired from the reception signal (for example, the PRACH signal) from the relay UE 13.

### Reference Signs List

1 WIRELESS COMMUNICATION SYSTEM
11 BASE STATION (eNB)
111 RECEPTION PROCESSING UNIT (UL)
1110 RECEPTION ANTENNA
1111 RF RECEPTION UNIT
1112 CP REMOVER
1113 FAST FOURIER TRANSFORMER (FFT)
1114 PHYSICAL CHANNEL SEPARATOR
1115 DATA SIGNAL DEMODULATION UNIT
1116, 1118 CHANNEL DECODER
1117 CONTROL SIGNAL DEMODULATION UNIT
1119 PRACH SIGNAL DETECTION UNIT
112 TRANSMISSION PROCESSING UNIT (DL)
1121 RS GENERATION UNIT
1122 DL DATA SIGNAL GENERATION UNIT
1123 DL CONTROL SIGNAL GENERATION UNIT
1124 IFFT
1125 CP ADDER
1126 RF TRANSMISSION UNIT
1127 TRANSMISSION ANTENNA
113 CONTROL UNIT
1131, 1131b CE LEVEL DETERMINER
1132 RELAY UE LAYER 2 ID AND C-RNTI DETERMINER
1133 D2D RESOURCE SCHEDULER
12 UE (MUE)
121 TRANSMISSION PROCESSING UNIT (CELLULAR COMMUNICATION)
1211 CHANNEL ENCODER
1212 IFFT
1213 CP ADDER
1214 RADIO (RF) TRANSMISSION UNIT
1215 TRANSMISSION ANTENNA
122 RECEPTION PROCESSING UNIT (CELLULAR COMMUNICATION)
1220 RECEPTION ANTENNA
1221 RF RECEPTION UNIT
1222 CP REMOVER
1223 PDSCH DEMODULATION UNIT
1224 RS DEMODULATION UNIT
1225 RSRP MEASUREMENT UNIT
123 TRANSMISSION PROCESSING UNIT (D2D COMMUNICATION)
1231 SA GENERATION UNIT
1232 D2D DATA GENERATION UNIT
1233 DS GENERATION UNIT
1234 RF TRANSMISSION UNIT
1235 TRANSMISSION ANTENNA
124 RECEPTION PROCESSING UNIT (D2D COMMUNICATION)
1240 RECEPTION ANTENNA
1241 RF RECEPTION UNIT
1242 D2D DS DETECTION UNIT
1243 D2D DATA DEMODULATION UNIT
125 CONTROL UNIT
1251 RESOURCE CONFIGURATOR
1252 DISCOVERY RESOURCE SELECTION UNIT
1253 D2D SCHEDULER
13 RELAY UE
131 TRANSMISSION PROCESSING UNIT (CELLULAR COMMUNICATION)
1311 CHANNEL ENCODER
1312 UL SIGNAL GENERATION UNIT
1313 IFFT 1314 CP ADDER
1315 RF TRANSMISSION UNIT
1316 TRANSMISSION ANTENNA
132 RECEPTION PROCESSING UNIT (CELLULAR COMMUNICATION)
1320 RECEPTION ANTENNA
1321 RF RECEPTION UNIT
1322 CP REMOVER
1323 PDSCH DEMODULATION UNIT
133 TRANSMISSION PROCESSING UNIT (D2D COMMUNICATION)
1331 SA GENERATION UNIT
1332 D2D DATA GENERATION UNIT
1333 DS GENERATION UNIT
1334 RF TRANSMISSION UNIT
1335 TRANSMISSION ANTENNA
134 RECEPTION PROCESSING UNIT (D2D COMMUNICATION)
1340 RECEPTION ANTENNA
1341 RF RECEPTION UNIT 1342 D2D DS DETECTION UNIT
1343 D2D DATA DEMODULATION UNIT
135 CONTROL UNIT
1351 RESOURCE CONFIGURATOR
1352 CE LEVEL DETERMINER
1352b RSRP DETERMINER
1353 D2D SCHEDULER

### CITATION LIST

### Patent Literature

PTL 1: Japanese National Publication of International Patent Application No. 2015-537422

### Non Patent Literature

NPL 1: [3GPP TS 36.211 V13.0.0 (2015-12), 3rd Generation Partnership Project; Technical Specification Group Radio Access Network; Evolved Universal Terrestrial Radio Access (E-UTRA); Physical channels and modulation (Release 13)].

## Claims

1. A wireless communication system (1) comprising:
a base station (11);
a relay node (13); and
a wireless equipment (12) configured to
perform communication for downlink with the base station (11) without the relay node (13) being involved and to perform communication for uplink with the base station (11) via the relay node (13),
wherein the wireless equipment is further configured to
transmit a discovery signal for discovering the relay node (13) by using a radio resource associated with a coverage enhancement level, the coverage enhancement level being determined in accordance with reception quality measured from a reference signal that is transmitted by the base station (11),
wherein the relay node (13) is configured to
transmit information on the radio resource on which the discovery signal is received, or information on the coverage enhancement level that is determined based on the radio resource on which the discovery signal is received, to the base station (11), and
wherein the base station (11) is configured to
determine the coverage enhancement level of the downlink for the wireless equipment (12), based on information that is received from the relay node (13), and
perform the communication for the downlink with the wireless equipment (12) at the determined coverage enhancement level.

2. The wireless communication system (1) according to claim 1,
wherein the received quality is a reference signal received power (RSRP) that is a received power of the reference signal.

3. The wireless communication system (1) according to claim 1,
wherein the relay node (13) is configured to transmit the information relating to the determined coverage enhancement level to the base station (11) with a signal on a random access channel for the base station (11).

4. The wireless communication system (1) according to claim 1,
wherein the relay node (13) is further configured to transmit the information relating to the determined coverage enhancement level to the base station (11) with a radio resource control (RRC) connection re-establishment request signal to the base station (11).

5. The wireless communication system (1) according to claim 1,
wherein the relay node (13) is further configured to transmit the information relating to determined coverage enhancement level to the base station (11) with a control channel signal or a data channel signal for the uplink that is completely established between the relay node (13) and the base station (11).

6. The wireless communication system (1) according to claim 1,
wherein the base station (11) is configured to transmit an identifier that is temporarily allocated to the wireless equipment (12) and an identifier of Layer 2 of the relay node (13), to the destination wireless equipment (12), at the determined coverage enhancement level.

7. The wireless communication system (1) according to claim 1,
wherein the base station (11) is configured to transmit information on allocation of a radio resource that is used by the wireless equipment (12) for the communication with the relay node (13), to the destination wireless equipment (12) at the determined coverage enhancement level.

8. The wireless communication system (1) according to claim 6,
wherein the wireless equipment (12) is configured to transmit one of, or both of, a control signal and a data signal to the destination base station (11) at the determined coverage enhancement level for the uplink in a case where the temporary identifier is not able to be received.

9. A wireless equipment (12) comprising:
a measurement unit configured to measure received quality of a reference signal that is received from a base station (11); and
a transmission unit configured to transmit a discovery signal for discovering a relay node (13) that relays communication for uplink to the base station (11), the discovery signal using a radio resource that is associated with a coverage enhancement level in accordance with the received quality.

10. A relay node (13) comprising:
a reception unit configured to receive a discovery signal that is received from a wireless equipment using a radio resource which is associated with a coverage enhancement level determined in accordance with reception quality measured by the wireless equipment from a reference signal that is transmitted by a base station; and
a transmission unit configured to transmit information on the radio resource that is used for the reception of the discovery signal or information relating to the coverage enhancement level that is determined based on the radio resource in accordance with the reception quality, to the base station (11).

11. A base station (11) comprising:
a transmission unit configured to transmit a reference signal;
a reception unit configured to receive from a relay node (13) information on a radio resource that is used for transmission of a discovery signal which is transmitted using the radio resource that is associated with a coverage enhancement level determined in accordance with reception quality measured by a wireless equipment from the reference signal, or information relating to the coverage enhancement level that is determined based on the radio resource in accordance with the reception quality; and
a control unit configured to determine the coverage enhancement level of downlink for the wireless equipment (12), based on the information that is received by the reception unit, and to control communication for the downlink with the wireless equipment (12) at the determined coverage enhancement level.

## Patentansprüche

1. Drahtloses Kommunikationssystem (1), umfassend:
eine Basisstation (11);
einen Relaisknoten (13); und
eine drahtlose Vorrichtung (12), die ausgelegt ist zum:
Durchführen von Kommunikation in der Abwärtsstrecke (Downlink) mit der Basisstation (11) ohne Beteiligung des Relaisknotens (13) und Kommunikation in der Aufwärtsstrecke (Uplink) mit der Basisstation (11) über den Relaisknoten (13),
wobei die drahtlose Vorrichtung ferner ausgelegt ist zum:
Senden eines Entdeckungssignals zum Entdecken des Relaisknotens (13) unter Nutzung einer Funkressource, die mit einem Funkversorgungs-Verbesserungs-Niveau verknüpft ist, wobei das Funkversorgungs-Verbesserungs-Niveau entsprechend einer Empfangsqualität bestimmt wird, die anhand eines Referenzsignals, das von der Basisstation (11) gesendet wird, gemessen wird,
wobei der Relaisknoten (13) ausgelegt ist zum:
Senden von Informationen zu der Funkressource, auf der das Entdeckungssignal empfangen wird, oder von Information zum Funkversorgungs-Verbesserungs-Niveau, das basierend auf der Funkressource, auf der das Entdeckungssignal empfangen wird, bestimmt wird, an die Basisstation (11), und
wobei die Basisstation (11) ausgelegt ist zum:
Bestimmen des Funkversorgungs-Verbesserungs-Niveaus der Abwärtsstrecke für die drahtlose Vorrichtung (12) basierend auf Informationen, die vom Relaisknoten (13) empfangen werden, und
Durchführen der Kommunikation in der Abwärtsstrecke mit der drahtlosen Vorrichtung (12) auf dem bestimmten Funkversorgungs-Verbesserungs-Niveau.

2. Drahtloses Kommunikationssystem (1) nach Anspruch 1,
wobei die Empfangsqualität eine Empfangsstärke des Referenzsignals (Reference Signal Received Power, RSRP) ist, die der Feldstärke entspricht, mit der das Referenzsignal empfangen wird.

3. Drahtloses Kommunikationssystem (1) nach Anspruch 1,
wobei der Relaisknoten (13) ausgelegt ist zum Senden der Informationen bezüglich des bestimmten Funkversorgungs-Verbesserungs-Niveaus an die Basisstation (11) mit einem Signal auf einem Direktzugriffskanal (Random Access Channel) für die Basisstation (11).

4. Drahtloses Kommunikationssystem (1) nach Anspruch 1,
wobei der Relaisknoten (13) ferner ausgelegt ist zum Senden der Informationen bezüglich des bestimmten Funkversorgungs-Verbesserungs-Niveaus an die Basisstation (11) mit einem Funkressourcenkontroll (Radio Resource Control, RRC)-Signal zur Anforderung einer Verbindungswiederherstellung an die Basisstation (11).

5. Drahtloses Kommunikationssystem (1) nach Anspruch 1,
wobei der Relaisknoten (13) ferner ausgelegt ist zum Senden der Informationen bezüglich des bestimmten Funkversorgungs-Verbesserungs-Niveaus an die Basisstation (11) mit einem Steuerkanal (Control Channel)-Signal oder einem Datenkanal (Data Channel)-Signal in der Aufwärtsstrecke, die zwischen dem Relaisknoten (13) und der Basisstation (11) vollständig aufgebaut ist.

6. Drahtloses Kommunikationssystem (1) nach Anspruch 1,
wobei die Basisstation (11) ausgelegt ist zum Senden einer Kennung, die temporär der drahtlosen Vorrichtung (12) zugeordnet ist, und einer Kennung der Schicht 2 des Relaisknotens (13) mit dem bestimmten Funkversorgungs-Verbesserungs-Niveau an die drahtlose Ziel-Vorrichtung (12).

7. Drahtloses Kommunikationssystem (1) nach Anspruch 1,
wobei die Basisstation (11) ausgelegt ist zum Senden von Informationen zur Zuteilung einer Funkressource, die von der drahtlosen Vorrichtung (12) für die Kommunikation mit dem Relaisknoten (13) genutzt wird, mit dem bestimmten Funkversorgungs-Verbesserungs-Niveau an die drahtlose Ziel-Vorrichtung (12).

8. Drahtloses Kommunikationssystem (1) nach Anspruch 6,
wobei die drahtlose Vorrichtung (12) ausgelegt ist zum Senden entweder eines Steuersignals und/oder eines Datensignals mit dem bestimmten Funkversorgungs-Verbesserungs-Niveau in der Aufwärtsstrecke an die Ziel-Basisstation (11), falls die temporäre Kennung nicht empfangen werden kann.

9. Drahtlose Vorrichtung (12), umfassend:
eine Messeinheit, die ausgelegt ist zum Messen der Empfangsqualität eines Referenzsignals, das von einer Basisstation (11) empfangen wird; und
eine Sendeeinheit, die ausgelegt ist zum Senden eines Entdeckungssignals, um einen Relaisknoten (13) zu entdecken, der Kommunikation in der Aufwärtsstrecke an die Basisstation (11) weiterleitet, wobei das Entdeckungssignal eine Funkressource nutzt, die mit einem Funkversorgungs-Verbesserungs-Niveau entsprechend der Empfangsqualität verknüpft ist.

10. Relaisknoten (13), umfassend:
eine Empfangseinheit, die ausgelegt ist zum Empfangen eines Entdeckungssignals, das von einer drahtlosen Vorrichtung über eine Funkressource empfangen wird, die mit einem Funkversorgungs-Verbesserungs-Niveau verknüpft ist, welches entsprechend einer Empfangsqualität bestimmt wird, die durch die drahtlose Vorrichtung anhand eines von einer Basisstation gesendeten Referenzsignals gemessen wird; und
eine Sendeeinheit, die ausgelegt ist zum Senden von Informationen zu der Funkressource, die für den Empfang des Entdeckungssignals genutzt wird, oder von Informationen bezüglich des Funkversorgungs-Verbesserungs-Niveaus, das basierend auf der Funkressource entsprechend der Empfangsqualität bestimmt wird, an die Basisstation (11).

11. Basisstation (11), umfassend:
eine Sendeeinheit, die ausgelegt ist zum Senden eines Referenzsignals;
eine Empfangseinheit, die ausgelegt ist zum Empfangen, von einem Relaisknoten (13), von Informationen zu einer Funkressource, die genutzt wird, um ein Entdeckungssignal zu senden, das über die Funkressource gesendet wird, welche mit einem Funkversorgungs-Verbesserungs-Niveau verknüpft ist, das entsprechend der von einer drahtlosen Vorrichtung anhand des Referenzsignals gemessenen Empfangsqualität bestimmt wird, oder Informationen bezüglich des Funkversorgungs-Verbesserungs-Niveaus, das basierend auf der Funkressource entsprechend der Empfangsqualität bestimmt wird; und
eine Steuereinheit, die ausgelegt ist zum Bestimmen des Funkversorgungs-Verbesserungs-Niveaus der Abwärtsstrecke für die drahtlose Vorrichtung (12) basierend auf den Informationen, die durch die Empfangseinheit empfangen werden, und zum Steuern der Kommunikation in der Abwärtsstrecke mit der drahtlosen Vorrichtung (12) mit dem bestimmten Funkversorgungs-Verbesserungs-Niveau.

## Revendications

1. Système de communication sans fil (1) comprenant :
une station de base (11) ;
un nœud de relais (13) ; et
un équipement sans fil (12) configuré pour
établir une communication pour une liaison descendante avec la station de base (11) sans impliquer le nœud relais (13) et pour établir une communication pour une liaison montante avec la station de base (11) via le nœud relais (13),
dans lequel l'équipement sans fil est en outre configuré pour
transmettre un signal de découverte pour découvrir le nœud relais (13) en utilisant une ressource radio associée à un niveau d'amélioration de couverture, le niveau d'amélioration de couverture étant déterminé en fonction d'une qualité de réception mesurée à partir d'un signal de référence qui est transmis par la station de base (11),
dans lequel le nœud relais (13) est configuré pour
transmettre des informations sur la ressource radio sur laquelle le signal de découverte est reçu, ou des informations sur le niveau d'amélioration de couverture qui est déterminé sur la base de la ressource radio sur laquelle le signal de découverte est reçu, à la station de base (11), et
dans lequel la station de base (11) est configurée pour
déterminer le niveau d'amélioration de couverture de la liaison descendante pour l'équipement sans fil (12), sur la base d'informations qui sont reçues du nœud relais (13), et
établir la communication pour la liaison descendante avec l'équipement sans fil (12) au niveau d'amélioration de couverture déterminé.

2. Système de communication sans fil (1) selon la revendication 1,
dans lequel la qualité reçue est une puissance reçue de signal de référence (RSRP) qui est une puissance reçue du signal de référence.

3. Système de communication sans fil (1) selon la revendication 1,
dans lequel le nœud relais (13) est configuré pour transmettre les informations relatives au niveau d'amélioration de couverture déterminé à la station de base (11) avec un signal sur un canal à accès aléatoire pour la station de base (11).

4. Système de communication sans fil (1) selon la revendication 1,
dans lequel le nœud relais (13) est en outre configuré pour transmettre les informations relatives au niveau d'amélioration de couverture déterminé à la station de base (11) avec un signal de demande de rétablissement de connexion à commande de ressources radio (RRC) à la station de base (11).

5. Système de communication sans fil (1) selon la revendication 1,
dans lequel le nœud relais (13) est en outre configuré pour transmettre les informations relatives au niveau d'amélioration de couverture déterminé à la station de base (11) avec un signal de canal de commande ou un signal de canal de données pour la liaison montante qui est complètement établie entre le nœud relais (13) et la station de base (11).

6. Système de communication sans fil (1) selon la revendication 1,
dans lequel la station de base (11) est configurée pour transmettre un identifiant qui est attribué temporairement à l'équipement sans fil (12) et un identifiant de Couche 2 du nœud relais (13), à l'équipement sans fil de destination (12), au niveau d'amélioration de couverture déterminé.

7. Système de communication sans fil (1) selon la revendication 1,
dans lequel la station de base (11) est configurée pour transmettre des informations sur l'allocation d'une ressource radio qui est utilisée par l'équipement sans fil (12) pour la communication avec le nœud relais (13), à l'équipement sans fil de destination (12) au niveau d'amélioration de couverture déterminé.

8. Système de communication sans fil (1) selon la revendication 6,
dans lequel l'équipement sans fil (12) est configuré pour transmettre l'un, ou les deux, parmi un signal de commande et un signal de données à la station de base de destination (11) au niveau d'amélioration de couverture déterminé pour la liaison montante dans un cas où l'identifiant temporaire n'est pas en mesure d'être reçu.

9. Equipement sans fil (12) comprenant :
une unité de mesure configurée pour mesurer une qualité reçue d'un signal de référence qui est reçu d'une station de base (11) ; et
une unité de transmission configurée pour transmettre un signal de découverte afin de découvrir un nœud relais (13) qui relaie une communication pour une liaison montante vers la station de base (11), le signal de découverte utilisant une ressource radio qui est associée à un niveau d'amélioration de couverture conformément à la qualité reçue.

10. Noeud relais (13) comprenant :
une unité de réception configurée pour recevoir un signal de découverte qui est reçu d'un équipement sans fil en utilisant une ressource radio qui est associée à un niveau d'amélioration de couverture déterminé en fonction d'une qualité de réception mesurée par l'équipement sans fil à partir d'un signal de référence qui est transmis par une station de base ; et
une unité de transmission configurée pour transmettre des informations sur la ressource radio qui est utilisée pour la réception du signal de découverte ou des informations relatives au niveau d'amélioration de couverture qui est déterminé sur la base de la ressource radio en fonction de la qualité de réception, à la station de base (11).

11. Station de base (11) comprenant :
une unité de transmission configurée pour transmettre un signal de référence ;
une unité de réception configurée pour recevoir d'un nœud de relais (13) des informations sur une ressource radio qui est utilisée pour une transmission d'un signal de découverte qui est transmis en utilisant la ressource radio qui est associée à un niveau d'amélioration de couverture déterminé en fonction d'une qualité de réception mesurée par un équipement sans fil à partir du signal de référence, ou des informations relatives au niveau d'amélioration de couverture qui est déterminé sur la base de la ressource radio en fonction de la qualité de réception ; et
une unité de commande configurée pour déterminer le niveau d'amélioration de couverture de liaison descendante pour l'équipement sans fil (12), sur la base des informations qui sont reçues par l'unité de réception, et pour commander une communication pour la liaison descendante avec l'équipement sans fil (12) au niveau d'amélioration de couverture déterminé.
